# EUROPEAN PATENT APPLICATION

(11) **EP 3 007 118 A1**
(43) Date of publication of application: **13.04.2016**
(21) Application number: 15156886.2
(22) Date of filing: 27.02.2015
(51) Int. Cl.: G06Q 10/08

(54) **Cooperation server, non-transitory computer-readable storage medium storing cooperation program, and EC system**

(30) Priority: 08.10.2014 JP 2014207345
(71) Applicant: IPS Co., Ltd., Osaka 530-0011 (JP)
(72) Inventor: Akita, Toshifumi, Osaka-shi, Osaka 530-0011 (JP)
(74) Representative: Grünecker Patent- und Rechtsanwälte PartG mbB

(57) **Abstract**

A server operated by an ERP includes a database in which business data is registered, receives business data from an EC site and an enterprise system, and transmits progress data used for displaying a progress data display screen displaying progress of each business process on a display device of a terminal by referring to the database to the terminal transmitting a progress data transmission request according to a progress data transmission request instruction from an administrator or a customer of the EC site.

## Description

### BACKGROUND

### Technical Field

The present invention relates to a cooperation server that cooperates an EC site selling products on the Internet by referring to a product data storing unit storing data of the products with enterprise systems supplying the products to the EC site to each other by communicating with the EC site and the enterprise systems, a non-transitory computer-readable storage medium storing a cooperation program that is used for operating the cooperation server, and an EC system that includes an EC site, enterprise systems, and a cooperation server.

### Related Art

Conventionally, there are systems that acquire and manage product information and the like of each product purchased by a customer in an EC system.

For example, a system has been disclosed, which includes a customer management apparatus, a POS system, an EC site system, and a customer terminal, and in which the POS system acquires product information and the like of each product purchased by a customer from a POS terminal disposed at each store and manages the acquired information (see Patent Literature 1).

### Citation List

### Patent Literature

Patent Literature 1: JP 2014-071682 A

### SUMMARY

In the invention disclosed in Patent Literature 1 described above, while received order data of the EC system can be comprehensively handled, the EC system includes a plurality of transactions having mutually-different characteristics from received order to delivery of a product that includes received order, payment, and shipment. Thus, in order to acquire the progress of each transaction, it is necessary to inquire a company that is responsible for the transaction. In other words, there is a problem in that there is a heavy operation burden of a user using an EC system for acquiring the progress of each transaction.

An object of the present invention is to resolve the above-described problem and enable a user using an EC system to inquire and manage the progress of transactions generated in the EC system altogether.

According to the present invention there is provided a cooperation server which is operated by an ERP. The cooperation server includes: a database in which business data generated for each business unit in a series of business processes executed in a transaction from received order to delivery of a product including received order, payment, and shipment is registered; a business data reception unit configured to receive business data from an EC site selling products on the Internet by referring to a product data storage unit that stores data of products and an enterprise system supplying products to the EC site; and a progress data transmission unit configured to transmit progress data used for displaying a progress data display screen displaying progress of each business process on a display device of a terminal by referring to the database to the terminal transmitting a progress data transmission request according to a progress data transmission request instruction from an administrator or a customer of the EC site.

By employing the above-described configuration, a user using an EC system is enabled to inquire about and manage the progress of transactions generated in the EC system altogether. In addition, the user using the EC system is enabled to inquire about and manage the progress of transactions having mutually-different characteristics generated in the EC system altogether.

A communication unit configured to communicate with the enterprise system that includes a business data storage unit storing various kinds of business data and an update unit configured to update the database based on the business data, which is transmitted by the enterprise system by referring to the business data storage unit, received by the business data reception unit may be configured to be included.

A received order data transmission unit configured to transmit received order data in which a received order content and a user ID are associated with each other to the enterprise system according to reception of a product purchase request from a customer using the EC site on the EC site may be further included, and the enterprise system may be configured to include: a received order data reception unit configured to receive received order data transmitted from the cooperation server; a non-EC site data reception unit configured to receive non-EC site data as business data from a non-EC site server that is a server managing data relating to transactions executed at a site other than the EC site and manages non-EC site data in which a user ID and at least one of payment data and shipment data are associated with other; and a business data update unit configured to update the business data stored in the business data storage unit based on the received received order data or the received non-EC site data.

It may be configured such that the communication unit additionally communicates with the non-EC site server, the business data reception unit additionally receives non-EC site data from the non-EC site server as business data, and the update unit updates the database based on the received non-EC site data.

It may be configured such that the enterprise system communicates with another EC-site management server managing another EC site of which an administer is different from that of the EC site and receives business data managed at the another EC site from the another EC site management server, and the business data update unit additionally updates the business data stored in the business data storage unit based on the received business data managed by the another EC site.

The progress data transmission unit may be configured to transmit the progress data display screen displaying progress of transactions of each ordered product.

The progress data transmission unit may be configured to include: an extraction unit configured to extract the business data managed by a designated user ID by referring to the database; and a progress specifying unit configured to specify the progress data representing progress of a transaction of each ordered product by referring to the extracted business data.

The progress data may be configured to represent progress of each business unit.

It may be configured such that the database includes a business data table in which the business data is registered, the business data is data that includes status data, common data, and process-specific data, the status data is data that represents progress of each business process, the common data is data that is common to business processes included in the same process flow configured by a plurality of business processes, the process-specific data is data that is specific to each business process included in the same process flow, and the status data is updated according to an update of the process-specific data.

In addition, according to the present invention, there is provided a non-transitory computer-readable storage medium storing a cooperation program used for controlling a cooperation server operated by an ERP. The cooperation program causes the cooperation server including a database in which business data generated for each business unit in a series of business processes executed in a transaction from received order to delivery of a product including received order, payment, and shipment is registered to execute: receiving business data from an EC site selling products on the Internet by referring to a product data storage unit that stores data of products and an enterprise system supplying products to the EC site; and transmitting progress data used for displaying a progress data display screen displaying progress of each business process on a display device of a terminal by referring to the database to the terminal transmitting a progress data transmission request according to a progress data transmission request instruction from an administrator or a customer of the EC site.

Furthermore, according to the present invention, there is provided an EC system including a cooperation server configured to be operated by an ERP, an EC site configured to sell products on the Internet by referring to a product data storage unit storing data of products, and an enterprise system configured to supply products to the EC site. The cooperation server includes: a database in which business data generated for each business unit in a series of business processes executed in a transaction from received order to delivery of a product including received order, payment, and shipment is registered; a business data reception unit configured to receive business data from the EC site and the enterprise system; and a progress data transmission unit configured to transmit progress data used for displaying a progress data display screen displaying progress of each business process on a display device of a terminal by referring to the database to the terminal transmitting a progress data transmission request according to a progress data transmission request instruction from an administrator or a customer of the EC site.

According to the present invention, a user using an EC system is enabled to inquire about and manage the progress of transactions generated in the EC system altogether. In addition, the user using the EC system is enabled to inquire about and manage the progress of transactions having mutually-different characteristics generated in the EC system altogether.

### BRIEF DESCRIPTION OF DRAWINGS

FIG. 1 is a block diagram that illustrates an example of the configuration of an EC system;
FIG. 2 is a schematic diagram that illustrates an example of a storage state of process flow data;
FIG. 3 is a block diagram that illustrates an example of the configuration of a cooperation server;
FIG. 4 is a schematic diagram that illustrates an example of a storage state of transaction data;
FIG. 5 is a schematic diagram that illustrates an example of a storage state of cooperation data;
FIG. 6 is a schematic diagram that illustrates an example of a storage state of product data;
FIG. 7 is a flowchart that illustrates an example of a cooperation database (DB) update process;
FIG. 8 is a flowchart that illustrates an example of a first update process;
FIG. 9 is a schematic diagram that illustrates an example of a storage state of updated cooperation data;
FIG. 10 is a schematic diagram that illustrates an example of a storage state of updated transaction data;
FIG. 11 is a flowchart that illustrates an example of a second update process;
FIG. 12 is a schematic diagram that illustrates an example of a storage state of updated product data;
FIG. 13 is a flowchart that illustrates an example of a process flow data DB update process;
FIG. 14 is a flowchart that illustrates an example of a progress data transmission process;
FIG. 15 is a schematic diagram that illustrates an example of an input screen; and
FIG. 16 is a schematic diagram that illustrates an example of a progress data display screen.

### DETAILED DESCRIPTION

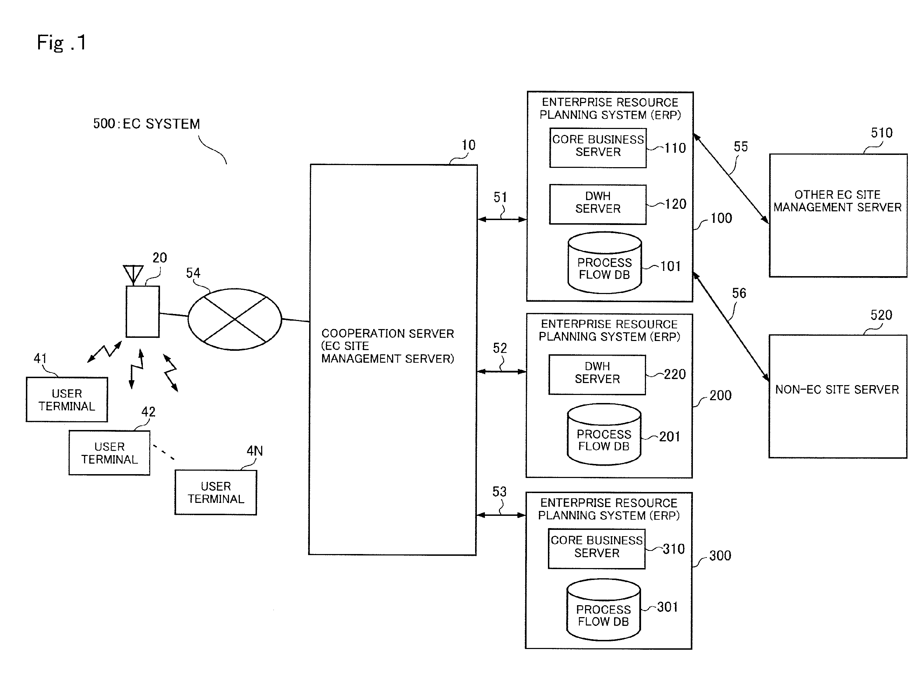

Hereinafter, an exemplary embodiment of the present invention will be described with reference to the drawings. FIG. 1 is a block diagram that illustrates an example of the configuration of an EC system 500 according to an embodiment of the present invention. As illustrated in FIG. 1, the EC system 500 includes a cooperation server 10, user terminals 41 to 4N (here, N is an arbitrary positive integer), enterprise systems (enterprise resource planning systems 100, 200, and 300), another EC site management server 510, and a non-EC site server 520.

The cooperation server 10 is connected to the enterprise resource planning systems 100, 200, and 300 and the user terminals 41 to 4N through communication networks 51, 52, 53, and 54 such as local area networks (LAN) or dedicated communication lines. The cooperation server 10 of this example is a server used for cooperating an EC site that sells products on the Internet by referring to a product data storage unit storing data of the products with an enterprise system providing the products to the EC site by communicating therewith. The cooperation server will be described later in detail.

The enterprise resource planning system 100 is connected to the cooperation server 10, another EC site management server 510, and a non-EC site server 520 through communication networks 51, 55, and 56 such as LANs or dedicated communication lines.

The enterprise resource planning system 100 includes an core business server 110, a data warehouse server (DWH server) 120, a cooperation program database (DB) 130, and a process flow DB 101. In addition, the enterprise resource planning system 200 includes a DWH server 220, a cooperation program DB 230, and a process flow DB 201. The enterprise resource planning system 300 includes an core business server 310, a cooperation program DB 330, and a business data DB 301 as a business data storage unit.

A plurality the enterprise resource planning systems 100, 200, and 300 having mutually-different configurations communicate with a predetermined server operated by an ERP as is necessary (in other words, according to the functions included in each system), thereby exhibiting the function of the enterprise resource planning system. In other words, in the EC system 500, also the system 200 not including an core business server or the system 300 not including a DWH server can exhibit the function of the enterprise resource planning system by communicating with a predetermined server operated by the ERP. In addition, in the EC system, the predetermined server operated by the ERP may be configured to be included in each of the enterprise resource planning systems 200 and 300. In each enterprise system (for example, the enterprise resource planning systems 100, 200, and 300), constituent elements having the same name have the same configuration, and thus, the enterprise resource planning system 100 including constituent elements common to all the systems among the enterprise resource planning systems 100, 200, and 300 will be described as an example.

Here, the core business server 110 and the DWH server 120 are assumed to be connected through a dedicated communication line.

The core business server 110, for example, is a server that is managed by a supervisor of the enterprise resource planning system 100, is configured to be communicable with various terminals, and has various functions for managing (for example generation, update, storage, and the like of information) data relating to various businesses. The core business server 110 is configured by a general information processing apparatus that includes an operating system (OS) and a relational DB.

Here, a form is data generated in a business and a general term of an account book and a slip. In an account book, items relating to receipts and disbursements of money and products are written, and a slip is source data for generating an account book and is a proof of a business transaction or the like. In this example, a case will be described in which the core business server 110 handles business data (hereinafter, may be referred to as process data) representing only slip data as the form data.

The core business server 110 performs various processes in accordance with a business application program. As examples of the business application program, there are a sales business management program, a purchase business management program, a production management program, a financial accounting management program, and a managerial accounting management program.

The DWH server 120, for example, is a server that is managed by a system supervisor of this system and has various functions for implementing a data warehouse. Here, a data warehouse represents a system analyzing the relevance between items in the business data such as form data accumulated in a time series. In addition, the DWH server 120 has a function for converting a file in the CSV format transmitted from the core business server 110 into a predetermined data format or the like and registering various kinds of data in a predetermined storage area. Furthermore, the DWH server 120 may be configured not to convert the data format but to extract data corresponding to each storage area from the state of the comma separated values (CSV) format.

The cooperation program DB 130 is a DB which is a non-transitory computer-readable storage medium, and in which a cooperation program used for executing a process for reflecting update information on the entire EC system in real time is stored. Here, as a process that is executed according to the cooperation program, for example, a process of receiving data transmitted from the EC system cooperation server 10 is executed. In addition, a process of receiving data managed by another EC site management server 510 not belonging to the EC system 500 and managing another EC site is executed. In addition, there is a process of updating the process flow data stored in the process flow DB 101 based on received various kinds of data. Furthermore, a process of notifying the EC system cooperation server 10 that the process flow data has been updated is executed. In addition, a process of transmitting/receiving data to/from the non-EC site server 520 managing data (for example, payment data or shipment data) handled outside the EC site and the like are executed.

In addition, while not particularly illustrated in the figure, the enterprise resource planning system 100 of this example includes a stock information storage unit storing stock information that is calculated based on information relating to incoming/outgoing stock that is included in the process flow data. The stock information of this example includes an item ID that can be used for uniquely specifying a product, an actual stock quantity, and an order-in-process quantity. Here, the "actual stock quantity" is information that represents an actual stock. In addition, the "order-in-process" is information that represents a quantity before shipping out of an ordered quantity.

The process flow DB 101 is a storage medium storing data that is collected, arranged, or the like by various kinds of information processing using various programs stored in an application program DB (not illustrated in the figure) of the core business server 110. Here, the process flow DB 101 corresponds to a business data storage unit. More specifically, in the process flow DB 101, process flow data generated for each business unit in a series of business processes performed in a transaction is stored. The transaction described here includes a transaction from acceptance of an order of a product to delivery of the product including received order, payment, and shipment.

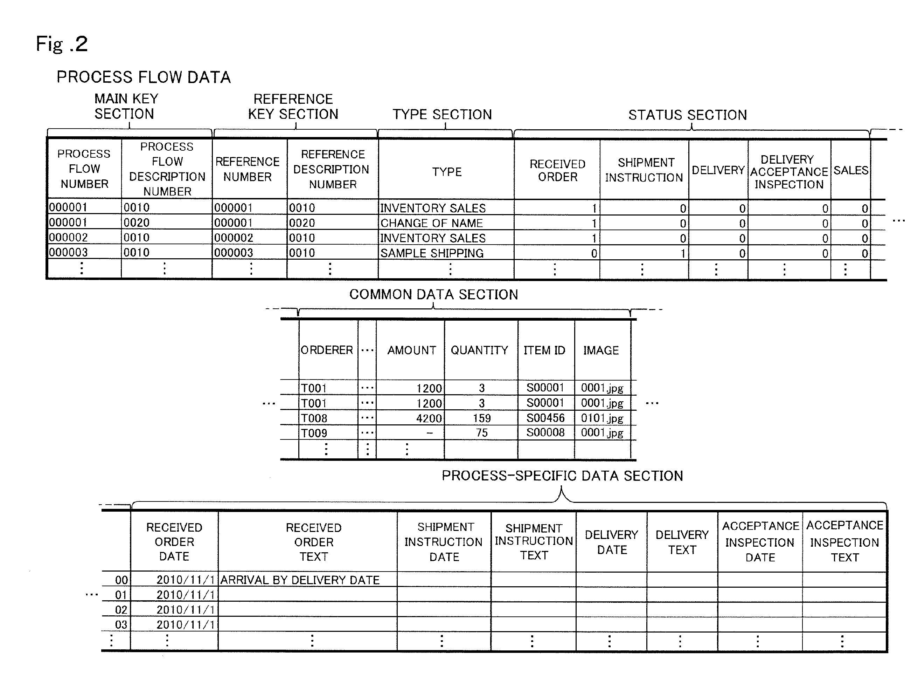

FIG. 2 is a schematic diagram that illustrates an example of a storage state of the process flow data as business data included in the process flow DB 101. As illustrated in FIG. 2, in this example, the process flow data is configured by at least one table and includes a main key section, a reference key section, a type section, a status section, a common data section, and a process-specific data section. Here, items (in other words, each column item in the process flow data table) corresponding to each section of the process flow data represents the type of data configuring the process flow data.

In this example, the data stored as the process flow data becomes data relating to a product or a service that is a target for an electronic commerce. In other words, in this example, the business data stored in the process flow DB 101 is used as a base of product data of the EC system 500.

One piece of the process flow data is stored in the same entry (in other words, the same row in the process table PT) in the process flow data table. In other words, while the process flow data has a structure in which data relating to one process flow is arranged in the same entry of the process flow table, in this example, in order to register the process flow data in the table in which process flow data of a different type is configured as the same item (column item), there are cases where unnecessary items are included in specific process flow data among the items (columns) configuring the table. In such a case, in the process flow table, a part storing the unnecessary process data has a vacant data (or "0").

Here, the "main key section" is a part, in which main key data that is data used for uniquely specifying the process flow data among the process flow data is stored, of the process flow data. In this example, the main key section is configured by a process flow number and a process flow specification number. In other words, in this example, a combination of a process flow number and a process flow specification number becomes an identifier (ID) of each process flow data. The main key section is updated at a time when the process flow data is registered for the first time. Here, "a time when the process flow data is registered for the first time" represents, for example, a time when process data, which belongs to a specific process flow, having a corresponding other process data that has not been registered is registered. In addition, the "update" described here includes the addition of data.

In addition, the "process flow number" is an identifier used for specifying the same process flow. The process flow number is assigned for each process flow. In this example, the same process flow number is assigned to the process flow data having the same type and the same orderer among the process flow data.

Furthermore, the "process flow specification number" is an identifier used for specifying specific process flow data among the process flow data to which the same process flow number is assigned. In other words, for example, in the process flow table illustrated in FIG. 2, in the business process "received order" in the type "inventory sales" of the process flow, process flow data including process data representing the received order of the business of the amount of money "1200" or "2600" from an orderer "T001" can be uniquely specified using a combination of a process flow number "000001" and a process flow specification number "0010" or "0020".

Next, the "reference key section" is a part in which reference key data, which is data used for specifying another process flow data (or another process data) relating to the process flow such as an original transaction of sales return among the process flow data, is stored. In this example, the reference key section is configured by a reference number and a reference specification number. The reference key section is updated when the process flow data is registered for the first time.

In addition, in the reference number and the reference specification number, a process flow number and a process flow specification number of another process flow relating to the process flow are stored. However, in a case where there is no other process flow relating to the process flow as in the case of a new transaction, data (in other words, the process flow number is stored in the reference number, and the process flow specification number is stored in the reference specification number) representing the same values as those of the main key section of the same entry are stored. In addition, in a case where the reference key section represents another process data relating to the process flow, data used for specifying the type of the process data is further disposed in the reference key section.

Furthermore, the "type section" is a part in which type data, which is data representing the type of the process flow such as inventory sales or sample shipping, among the process flow data is stored. The type section is updated when the process flow data is registered for the first time. Here, the kinds of the process flows are not limited to the inventory sales and the sample shipping.

The "status section" is a part in which status data, which is data (in other words, data representing the progress statuses of a plurality of business processes included in the process flow) representing the progress of the process flow among the process flow data, is stored. In this example, the status data is set to "0" for an unsettled business process that is needed in the process flow and is set to "1" for a settled business process, thereby representing the progress of each business process. In other words, for example, as illustrated in FIG. 2, in a process flow of the "inventory sales", in a case where the business processes included in the process flow are "received order", "shipment", "delivery", "delivery acceptance inspection", and "sales", it is assumed that process-specific data (for example, received order data) relating to the business process "received order" is registered. In such a case, in the status data, a part corresponding to the "sales" is "1", and the other parts are maintained to be in the initial states (in other words, a state in which "0" is set).

In this example, the status section is updated for each process flow data. In other words, the status section is updated, when each business process is determined to have been completed according to the satisfaction of a predetermined status change condition. Here, although the status change condition is not particularly limited, in this example, it is assumed that "all the process-specific data corresponding to one business process is input" is stored in a predetermined storage area of the enterprise resource planning system 100 as the status change condition.

In addition, the "common data section" is a part storing common data that is data (in other words, data that is common to business processes included in the same process flow) not depending on a business process such as an orderer or a shipping destination among the process flow data. The common data section is updated when the process flow data is registered for the first time. The "common data section" of this example includes an item ID used for uniquely specifying a product, a quantity, and an image representing the product.

The "process-specific data section" is a part storing the process-specific data that is data unique to each business process included in the same process flow such as received order date or data (for example, text data representing precautions such as "arrival by delivery date" or "fragile goods (attention: fragile goods)" registered in each business process among the process flow data. The process-specific data section is updated for each business process. Accordingly, in this example, among the process flow data, data that depends on a business process is the "process-specific data" and data that does not depend on a business process is the "common data".

While the process flow data of this example has been described as above, the definitions of various terms represented in FIG. 2 will be simply described.

First, the "received order" represents a state in which an order is received from a customer and a contract with the customer is made. In other words, in this example, the "received order" represents a state that includes not only a case where an order is received from a general customer but also a case where an order is received from a user using the EC site.

In addition, the "shipment instruction" represents a state in which an instruction for shipping a product is made for a warehouseman or a distribution staff. In other words, in this example, the "shipment instruction" represents a state in which a shipment instruction is made for a product that is purchased by a user who has purchased the product at the EC site.

The "delivery" represents that a product is shipped from the warehouse and starts to be transferred. In other words, in this example, the "delivery" represents a state in which a product purchased by a user using the EC site is shipped from a warehouse.

In addition, the "acceptance inspection" represents that the acceptance inspection is completed by the customer, and the ownership of the product is changed over to the customer.

The "sales" represents a state in which the customer's acceptance inspection is checked, and the amount of claims for the customer is finalized (the claims are accounted).

In addition, the term "acceptance inspection" is used to represent an "operation of inspecting whether or not a supplied product or service has the specifications (the quantity, the color, the shape, and the quality as ordered) as ordered" or the "transition of ownership of assets at the time of completion of the acceptance inspection" as well. In addition, in financial accounting (or institutional account) or on an ERP system, in order to clarify the transmission timing of the ownership of the assets, an event of "acceptance inspection" is defined to be differently from the delivery.

Furthermore, in this example, it is assumed that slip data (for example, for slip data corresponding to a received order slip, data that is associated with received order slip header information, received order slip specification information, delivery date and schedule, and the like and is stored in a structure that is searchable based on a slip number or the like; a received order number, a purchase order number, a shipment number, a storage and retrieval number, an invoice inquiry, a billing number, an accounting number, and the like are included in the slip number) that is generally used is included in the process flow data.

In the EC system 500 of this example, as described above, the process flow data is configured to be managed by one process flow table. However, the configuration is not limited to such a configuration, a configuration may be employed in which the enterprise system (for example, the enterprise resource planning system 100) manages the process flow data, for example, using a plurality of tables for each type to be described later or for each data of which a part (for example, an orderer or the like) of the content of the common data to be described later is the same.

The cooperation server 10 is a server that is used for cooperating an EC site managed thereby with enterprise systems (the enterprise resource planning systems 100, 200, and 300). The cooperation server 10, for example, is configured by an information processing apparatus such as a WWW server and is managed by a supervisor of the EC system 500 or the like.

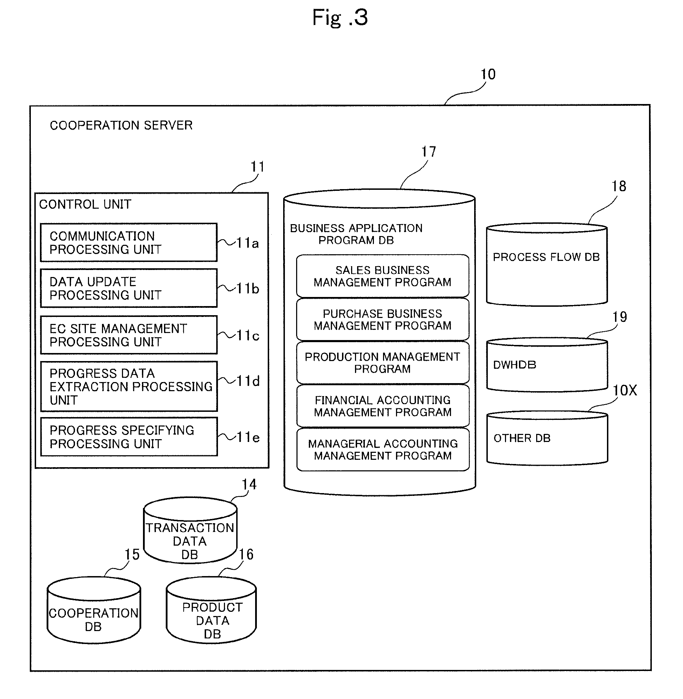

FIG. 3 is a block diagram that illustrates an example of the configuration of the cooperation server 10. As illustrated in FIG. 3, the cooperation server 10 includes a control unit 11 that performs various kinds of control, a transaction data DB 14, a cooperation DB 15, a product data DB 16, a business application program DB 17, a process flow DB 18, a DWH DB 19, and the other DB 10X that stores various kinds of data (for example, data used by various programs stored in the business application program DB 17) that is necessary for realizing functions of a general core business server.

The control unit 11 includes a communication processing unit 11a, a data update processing unit 11b, an EC site management processing unit 11c, a progress data extraction processing unit 11d, and a progress specifying processing unit 11e. Each processing unit included in the control unit 11 performs each process based on a program stored in the business application program DB 17.

The communication processing unit 11a has a function for executing a process of transmitting data used by the EC system 500 to other terminals, a process of receiving the data from other terminals, and the like.

The data update processing unit 11b has a function for updating data used by the EC system 500. More specifically, the data update processing unit 11b executes a process of adding process flow data to the cooperation DB 15, a process of updating the process data, a process of writing data in a predetermined recording area, and the like.

The EC site management processing unit 11c executes a process used for causing the cooperation server 10 to serve as a server that manages the EC site. More specifically, the EC site management processing unit 11c has a function for executing a process of receiving a product purchase request from a user using the EC site, a process of updating cooperation data based on the content of the purchase request, a process of transmitting purchase request information representing that the purchase request has been received to the enterprise system, and the like.

The progress data extraction processing unit 11d has a function for executing a process of extracting progress data used for displaying a progress data display screen that displays the progress of each business process on a display device. More specifically, the progress data extraction processing unit 11d extracts process flow data managed by a designated user ID by referring to the process flow DB 101.

The progress specifying processing unit 11e has a function for executing a process of specifying the progress of each business unit in a business process of each product. More specifically, by referring to process flow data extracted by the progress data extraction processing unit 11d by referring to the process flow DB 101, the progress specifying processing unit 11e specifies the progress of each business unit for each product. In this example, while the progress of each business unit for each ordered product is configured to be specified, the progress of each ordered product may be configured to be specified.

The transaction data DB 14 is a storage medium that stores transaction data including purchase request information that is transmitted from the user terminals 41 to 4N. The transaction data is data that configures the EC site.

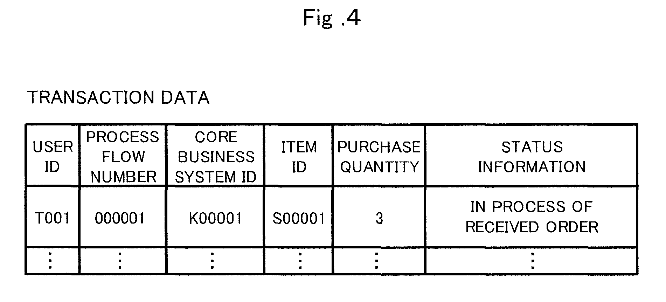

FIG. 4 is a schematic diagram that illustrates an example of a storage state of transaction data that is stored in the transaction data DB 14. As illustrated in FIG. 4, the transaction data is information that is stored when purchase request information is received from the user terminals 41 to 4N and includes a user ID, a process flow number, an enterprise system ID, an item ID, a quantity, and status information. In addition, the status information is "in process of received order" when data is added (in other words, when a purchase request is received) and then is appropriately updated according to the progress status of the process (for example, updated to "delivery completed" or the like).

Here, the enterprise system ID is ID information used for specifying an enterprise system that is a product source. For example, for a product provided by the enterprise resource planning system 100, an identifier "K0001" is stored.

The cooperation DB 15 is a storage medium that stores cooperation data used for cooperating the EC site and the enterprise systems (the enterprise resource planning systems 100, 200, and 300) with each other.

Here, the cooperation data is configured based on the process flow data that is transmitted from the enterprise systems (for example, the enterprise resource planning systems 100 and 200). In this example, while the cooperation server 10 is configured to include one cooperation DB 15, the cooperation server 10 may be configured to include a plurality of DBs in which replica data of the process flow data DB transmitted from each enterprise system is stored.

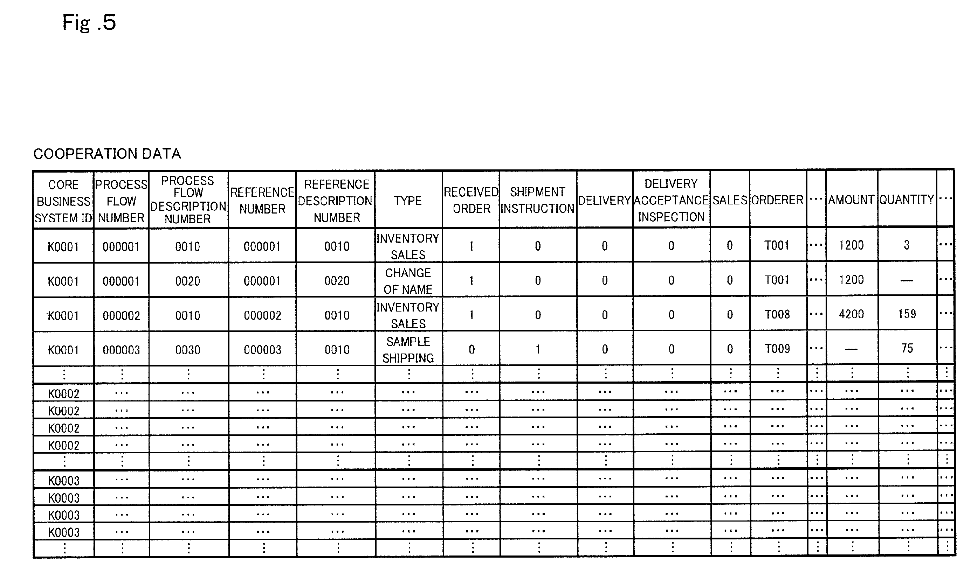

FIG. 5 is a schematic diagram that illustrates an example of a storage state of the cooperation data stored in the cooperation DB 15. In this example, since the process flow data is directly integrated as cooperation data without changing the configuration of the process flow data, the cooperation data, as illustrated in FIG. 5, has the same configuration as the process flow data that is stored in the process flow DB 101 described above.

The product data DB 16 is a storage medium that stores product data used for configuring the EC site.

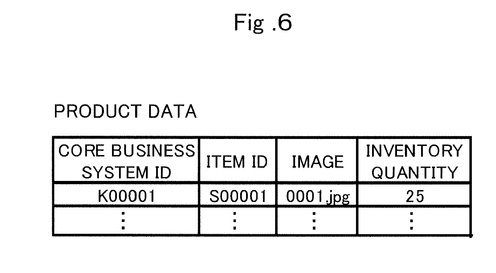

FIG. 6 is a schematic diagram that illustrates an example of a storage state of product data that is stored in the product data DB 16. As illustrated in FIG. 6, the product data is data that configures the EC site and includes an enterprise system ID, an item ID, an image, and a stock quantity.

Here, the stock quantity is information that represents the quantity of the stock of products. The stock quantity managed here is updated by the EC site management processing unit 11c when the cooperation server 10 receives orders from the user terminals. More specifically, the stock quantity is updated by the EC site management processing unit 11c when an order is received from the user terminals 41 to 4N. More specifically, the stock quantity may be rewritten as a numerical value that is acquired by subtracting the number of accepted orders from the current stock quantity.

The business application program DB 17 is a storage medium that stores programs used for various businesses. The business application program DB 17, for example, stores various programs such as a sales business management program, a purchase business management program, a production management program, a financial accounting management program, a managerial accounting management program, a data update processing program, and a data transmission/reception processing program.

The process flow DB 18 is a storage medium that stores process flow data configured by various kinds of process data (or form data) that is collected and arranged by various information processes using various programs stored in the business application program DB 17. The process flow data stored in the process flow DB 18 is generated based on information (for example, process flow data) transmitted from each enterprise system.

In this example, the cooperation server 10 is configured to have a function for providing various kinds of data stored in the process flow DB 18 and the other DB 10X in response to requests from predetermined external apparatuses (for example, the enterprise resource planning systems 100, 200, and 300). Thus, the cooperation server 10 has the functions of the core business server. In other words, the cooperation server 10 is includes an ERP engine.

In addition, although not illustrated in the figure, in this example, the cooperation server 10 is assumed to have a function as a DWH server having various functions for realizing a data warehouse. By including the ERP engine and the configuration for the function of the DWH server, the cooperation server 10 may be configured to provide information requested as an enterprise resource planning system also for the enterprise resource planning systems (for example, the enterprise resource planning system 100 having both the core business server and the DWH server, the enterprise resource planning system 200 having only the DWH server, and the enterprise resource planning system 300 having only the DWH server) having mutually different configurations.

In this example, the cooperation server 10 is configured to include the ERP engine by including the process flow DB 18 and the other DB 10X. However, the cooperation server 10 may be configured not to include the process flow DB 18 and the other DB 10X.

Each of the user terminals 41 to 4N is an information processing apparatus such as a mobile terminal or a personal computer (PC) including a central processing unit (CPU), a ROM, a RAM, a display unit, and the like. Here, an electronic commerce partner assumed as a user includes not only a final consumer but also a company, a public organization, and the like. In other words, in this example, the user is a client of the EC site.

Each of the user terminals 41 to 4N communicates with the cooperation server 10 through a repeater 20 and a communication network 54. In addition, each of the user terminals 41 to 4N includes a storage medium that stores various applications capable of reading an EC page such as a web browser and the like. Each of the user terminals 41 to 4N has a function for acquiring various kinds of data from the cooperation server 10, a function for displaying acquired data, and the like, for example, in response to a user's operation input. Such various kinds of data include product data used for a purchase and progress data relating to a progress status of a transaction relating to a product that has been ordered.

Another EC site management server 510 is a server that manages an EC site without executing a product purchase request, stock management, or the like in the EC system 500. In other words, another EC site management server 510 is a server that manages EC sites of a kind different from the EC sites managed by the EC system 500. Another EC site management server 510 has a function for managing transaction information (for example, order information) executed at another EC site, a function for transmitting transaction information (for example, order information) to the enterprise resource planning system 100, and the like.

The non-EC site server 520 is a server that is managed by companies such as a delivery company and a payment company. The non-EC site server 520 manages data (for example, payment data and shipment data; hereinafter, may be referred to as "non-EC site data") according to a handling field of the company. In this example, the non-EC site data is data in which a user ID and at least one of the payment data and the shipment data is associated with each other. In addition, the non-EC site server 520 has a function for receiving a shipment instruction or a delivery instruction from the cooperation server 10 or the enterprise resource planning systems 100, 200, and 300 and a function for transmitting data relating to a shipment status or a delivery status corresponding to the shipment instruction or the delivery instruction that has been received to the enterprise resource planning system 100. In other words, the enterprise resource planning system 100 receives non-EC site data from the non-EC site server 520 as business data.

Next, the operation of the system 500 of this example will be described with reference to the drawing. The contents of the operation and the process that are not particularly related to the present invention may not be presented.

First, a cooperation DB update process executed by the cooperation server 10 in the system 500 of this example will be described.

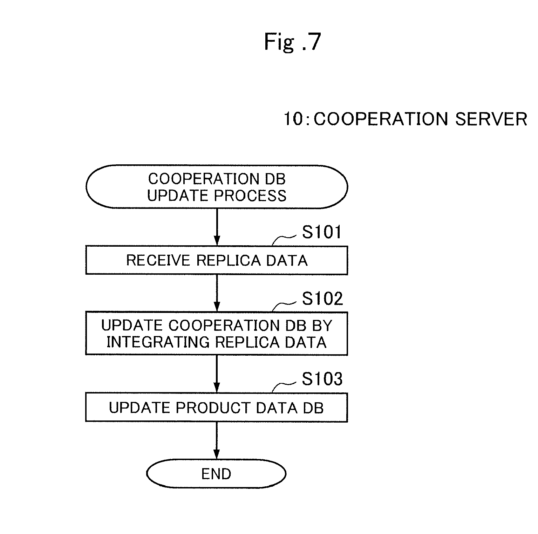

FIG. 7 is a flowchart that illustrates an example of the cooperation DB update process executed by the cooperation server 10 in the system 500 of this example. Here, a case will be described as an example in which a plurality of enterprise systems (for example, companies or predetermined groups inside a company) is present in the EC system 1000. In addition, here, a case will be described as an example in which a database is newly built from a state in which the database has not been built. More specifically, a case will be described as an example in which data transmitted from the plurality of enterprise systems is integrated as one piece of data.

In the cooperation DB update process, first, the cooperation server 10 receives replica data of a DB from each of the enterprise system (the enterprise resource planning systems 100, 200, and 300) included in the EC system in step S101. In this example, three DBs are received. More specifically, the cooperation server 10 receives replica data of the process flow DB 101 from the enterprise resource planning system 100. In addition, the cooperation server 10 receives replica data of the process flow DB 201 from the enterprise resource planning system 200. Furthermore, the cooperation server 10 receives replica data of the process flow DB 301 from the enterprise resource planning system 300. Here, the data received in step S101 includes an enterprise system ID used for uniquely specifying the enterprise system that is a transmission source.

In the system 500 of this example, while replica data of the DB stored in the enterprise resource planning system 100 is configured to be transmitted, the enterprise resource planning system 100 may be configured to extract data required for configuring an EC site and transmit the extracted data.

When the replica of the DB is received from each enterprise system, the cooperation server 10 integrates the received replica data into one piece of data and updates the cooperation DB based on the integrated data in step S102. As described above, in this example, each of the three DBs that have been received is configured by at least one or more tables, and the DBs are configured by tables (tables having the same column items) having the same structure. Thus, the cooperation server 10 can generate cooperation data by directly integrating the replica data of the DBs. According to such a configuration, since the number of tables included in the DB can be suppressed to be minimal, the amount of data required for building the EC site can be reduced. In a case where an EC system that handles a plurality of pieces of business data stored in the enterprise systems as in this example is to be built, the EC system can be built by employing a simple configuration.

In this example, the cooperation server 10 is configured to generate one cooperation DB 15 by receiving the replica of the DB managed by each enterprise system from each of the plurality of enterprise systems included in the EC system. However, the system 500 of this example is not limited to such a configuration. For example, the cooperation server 10 may be configured to generate one cooperation DB based on a plurality of DBs by receiving replica data of each of the plurality of process flow DBs included in one enterprise system. In addition, the cooperation server 10 may be configured to generate one cooperation DB by receiving replica data of one process flow DB included in one enterprise system.

In addition, in a case where a cooperation DB is to be built, based on received business data, data relating to items corresponding to display items displayed on the EC site is extracted from among data relating to the process flow, and the cooperation DB having a structure in which the extracted data is arranged in the same entries may be configured to be built. More specifically, the cooperation server 10 may be configured to include a storage unit that includes data representing display items displayed on the EC site and to extract data relating to items corresponding to the display items displayed on the EC site from among the data relating to the process flow by referring to the data included in the storage unit.

In addition, in a case where the cooperation DB 15 has already been built, the cooperation DB 15 may be configured to be updated by receiving only new process flow data from the enterprise system in step S101 instead of receiving the replica data and registering the received process flow data in the cooperation DB 15.

When the cooperation DB 15 is updated, the cooperation server 10 updates the product data DB 16 based on the cooperation data in step S103. In other words, the product data used for configuring the EC site is generated based on the cooperation data. More specifically, data corresponding to predetermined items (for example, an item ID, an enterprise system ID, a stock quantity, and a status) included in the cooperation data is extracted, and each extracted item is stored in the product data DB 16.

When the product data DB 16 is updated, the cooperation server 10 ends the cooperation DB update process.

Next, an example of a first update process that is executed by the cooperation server 10 in the system 500 of this example will be described. In the first update process, a process of reflecting an updated content of the cooperation DB 15 on the EC site is executed.

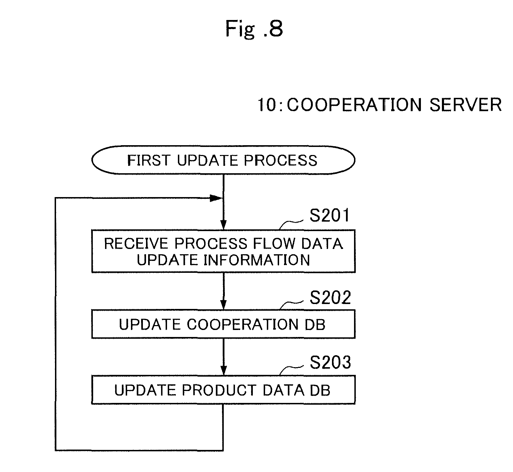

FIG. 8 is a flowchart that illustrates an example of the first update process executed by the cooperation server 10 in the system 500 of this example. In the first update process, various kinds of data are transmitted from each enterprise system. For the simplification of the description, in the first update process described hereinafter, a case will be described as an example in which data is transmitted from the enterprise resource planning system 100, and the transaction data illustrated in FIG. 4, the cooperation data illustrated in FIG. 5, and the product data illustrated in FIG. 6 are updated. In this example, while the cooperation server 10 is operated, the process executed in the first update process is assumed to be looped.

In the first update process, first, the cooperation server 10 receives process flow data update information representing that the enterprise resource planning system 100 has updated the process flow DB 101 from the enterprise resource planning system 100 in step S201. Here, the process flow data update information includes added process flow data and an enterprise system ID representing the enterprise resource planning system 100 that is a transmission source. Here, process flow data update information including process flow data in which an enterprise system ID is "K00001", "shipment" is "1", "Item ID" is "S00001", and "Orderer" is "T001" will be described as an example.

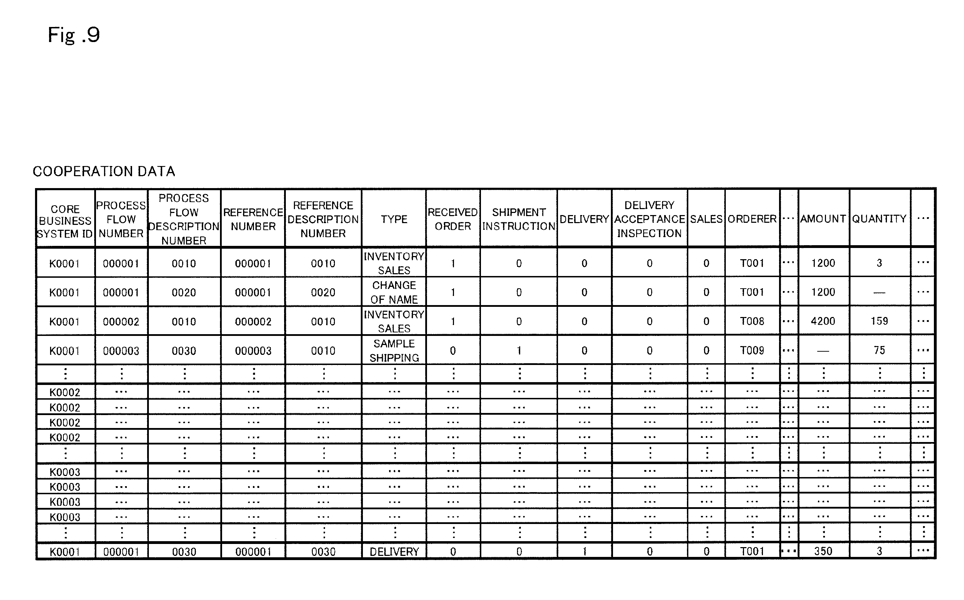

When the process flow data update information is received, the cooperation server 10 updates the cooperation DB 15 based on the received process flow data update information in step S202. More specifically, a new table as data received in step S201 is added to a lowermost part of the cooperation data illustrated in FIG. 5. In other words, the cooperation data illustrated in FIG. 5 is updated with the cooperation data illustrated in FIG. 9.

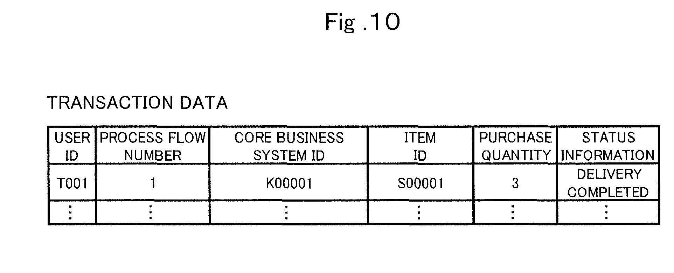

When the cooperation DB 15 is updated, the cooperation server 10 updates the product data DB 16 based on the updated content in step S203. In other words, by referring to the status section included in the updated cooperation data, data to be changed is determined, and the product data DB 16 is updated according to the determination. As illustrated in FIG. 9, in this example, since the status of the added process flow data is "shipment", by referring to the "orderer" included in the added process flow data, "T001" is specified, and transaction data for changing the status to "shipment" is specified. Then, as illustrated in FIG. 10, the status of the specified part is changed from "in process of received order" to "delivery completed". In other words, the transaction data illustrated in FIG. 4 is updated to the transaction data illustrated in FIG. 10.

When the product data DB 16 is updated, the cooperation server 10 proceeds to step S201 and waits until process flow data update information is received.

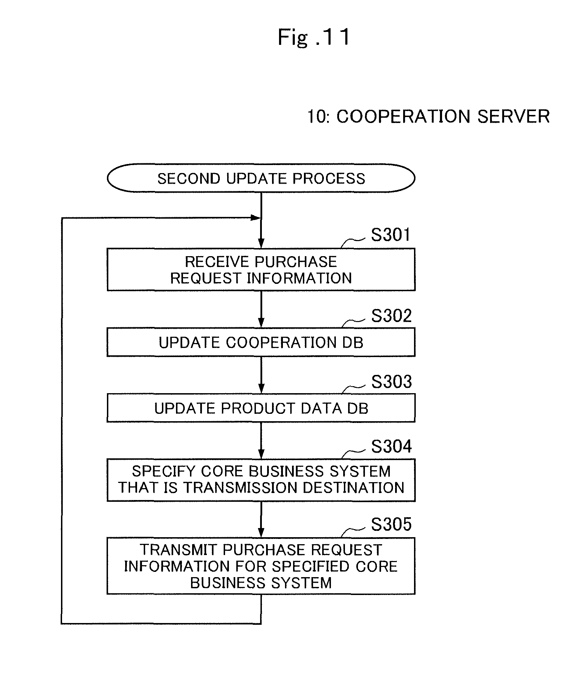

Next, an example of a second update process executed by the cooperation server 10 in the system 500 of this example will be described. FIG. 11 is a flowchart that illustrates an example of the second update process executed by the cooperation server 10 in the system 500 of this example. In the second update process, a product purchase request is transmitted from one of the user terminals 41 to 4N. For the simplification of the description, in the second update process described hereinafter, a case will be described as an example in which a product purchase request is transmitted from the user terminal 41. In this example, while the case where a product purchase request is transmitted will be described as an example, a reading request for reading information relating to the shipment status of a product or the like may be configured to be transmitted. In this example, while the cooperation server 10 is operated, the process executed in the second update process is assumed to be looped.

In the second update process, first, the cooperation server 10 receives the purchase request from the user terminal 41 in step S301.

When the purchase request information is received, the cooperation server 10 stores the purchase request information in the transaction data DB 14 and updates the cooperation DB 15 in step S302. More specifically, new process flow data, to which a process flow specification number is assigned based on the process flow number included in the purchase request information, configured by different information included in the purchase request information such as an enterprise system ID and the like is stored in the new process flow table.

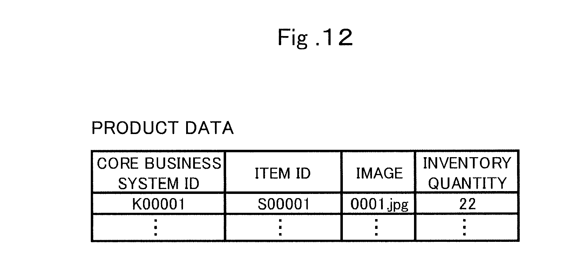

When the cooperation DB 15 is updated, the cooperation server 10 updates the product data DB 16 in step S303. More specifically, product data to be updated is specified based on the enterprise system ID and the item ID. More specifically, in the product data, data having the same enterprise system ID and the same item ID as those represented in the purchase request information is specified, and a stock quantity of the specified data is decreased by a purchase quantity. For example, in a case where the product data illustrated in FIG. 6 is stored, when purchase request information in which the "enterprise system ID" is "00001", the "item ID" is "S00001", and the "purchase quantity" is "3" is received, as the product data illustrated in FIG. 12, the "stock information" is updated from "25" to "22".

When the product data DB 16 is updated, the cooperation server 10 specifies an enterprise system corresponding to the purchase request information in step S304. In other words, an enterprise system that is the provision source of the product is specified. Here, the corresponding enterprise system represents an enterprise system that has transmitted replica data corresponding to the information transmitted from the user terminal to the cooperation server 10 in step S101 described above.

When the enterprise system corresponding to the purchase request is specified, the cooperation server 10 transmits the purchase request information to the specified enterprise system in step S305. In the system 500 of this example, while the purchase request information is configured to be transmitted to the enterprise resource planning system 100, the process flow data added in step S302 may be configured to be transmitted.

When the purchase request information is transmitted, the cooperation server 10 proceeds to step S301 and waits until purchase request information is received.

Next, an example of a process flow data DB update process executed by the enterprise system (the enterprise resource planning systems 100, 200, and 300) in the system 500 of this example will be described. In the process flow data DB update process of this example, a case will be described as an example in which the enterprise resource planning system 100 among the enterprise systems executes the process.

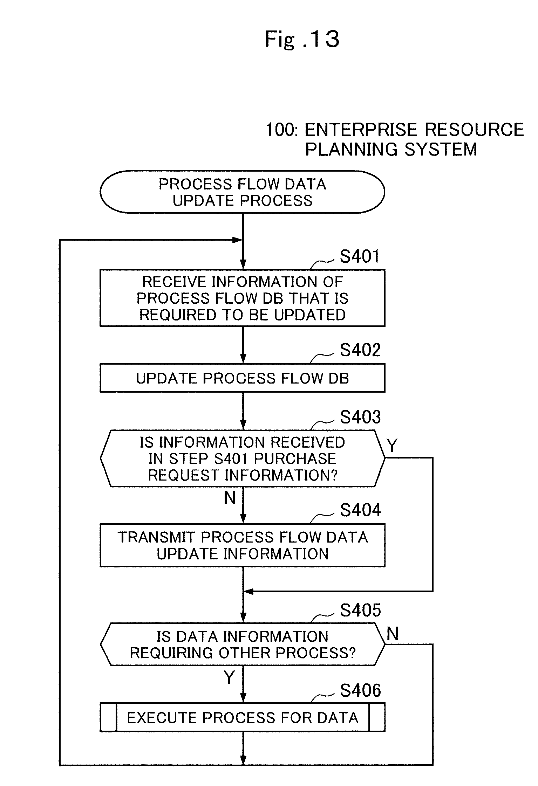

FIG. 13 is a flowchart that illustrates an example of the process flow data DB update process executed by the enterprise resource planning system 100 in the system 500 of this example. The process flow data DB update process of this example is executed by a cooperation program included in the cooperation program DB 130. In addition, in the process flow data DB update process, a process of transmitting predetermined data to the cooperation server 10, a terminal managed by the delivery company, or the like by being triggered upon the reception of information requiring an update of the process flow data is executed. In this example, while the enterprise resource planning system 100 is operated, the process is assumed to be looped.

In the process flow data DB update process, first, the enterprise resource planning system 100 receives information requiring an update of the process flow DB 101 in step S401. The data received here, for example, includes the purchase request information representing that there has been a product purchase request transmitted from the cooperation server 10, new process flow data (in other words, the first column in the process flow table illustrated in FIG. 2) that is input according to a direct input from a supervisor of the enterprise resource planning system 100, process flow data relating to a shipment status or a payment status transmitted from the non-EC site server 520 managed by a delivery company, a payment company, or the like, and the like.

When the information requiring an update of the process flow DB 101 is received, the enterprise resource planning system 100 updates the process flow DB 101 based on the input data in step S402. More specifically, new process flow data, to which a process flow specification number has been assigned based on the process flow number included in the purchase request information, configured by other information included in the purchase request information such as an enterprise system ID is stored in the new process flow table.

When the process flow DB 101 is updated, the enterprise resource planning system 100 determines whether or not the process flow DB 101 has been updated based on the reception of the purchase request information in step S403.

In a case where the process flow DB 101 is determined to have been updated based on the reception of the purchase request information (Yes in step S403), the enterprise resource planning system 100 determines whether or not the data received in step S401 is information requiring the other processes in step S405.

On the other hand, in a case where the update of the process flow DB 101 is determined not to be based on the reception of the purchase request information (No in step S403), the enterprise resource planning system 100 transmits information representing that the process flow DB 101 has been updated to the cooperation server 10 in step S404. In other words, the enterprise resource planning system 100 transmits the process flow data update information to the cooperation server 10.

When the process flow data update information is transmitted to the cooperation server 10, the enterprise resource planning system 100 determines whether or not the data received in step S401 is information requiring the other processes in step S405.

In a case where the data received in step S401 is determined to be the information requiring the other processes (Yes in step S405), the enterprise resource planning system 100 performs processes according to the content of the data in step S406. When the processes according to the content of the data are executed, the enterprise resource planning system 100 proceeds to step S401 and waits until data requiring an update of the process flow DB 101 is input.

Here, "the information requiring the other processes", for example, is information requiring a shipment instruction for a delivery company, information representing that a predetermined product has been shipped, or the like. For example, in a case where the information requiring a shipment instruction for a delivery company is received in step S401, the enterprise resource planning system 100 executes a process of transmitting the shipment instruction to a terminal managed by the delivery company that is a shipping source. In addition, for example, in a case where data representing that a predetermined product has been shipped is received in step S401, the enterprise resource planning system 100 decreases a stock quantity included in the stock information by a shipped quantity so as to update the stock quantity.

Here, "the process of a case where the information representing that a predetermined product has been shipped is received in step S401" that is executed as the other process will be described in detail. In this process, the enterprise resource planning system 100 specifies the "item ID" and the "quantity" by referring to the "common data section". Thereafter, the enterprise resource planning system 100 specifies stock information corresponding to the specified item ID by referring to the stock information storage unit. Then, the enterprise resource planning system 100 decreases the "actual stock quantity" and the "quantity in process of received order" stored in the stock information by the "quantity" specified as above so as to update the actual stock quantity and the quantity in process of received order. As above, the process of a case where the information representing that a predetermined product has been shipped is received in step S401 is executed.

On the other hand, in a case where the data input in step S401 is determined to be data not requiring the other process (No in step S405), the enterprise resource planning system 100 is returned to step S401 and waits until data requiring an update of the process flow DB 101 is input.

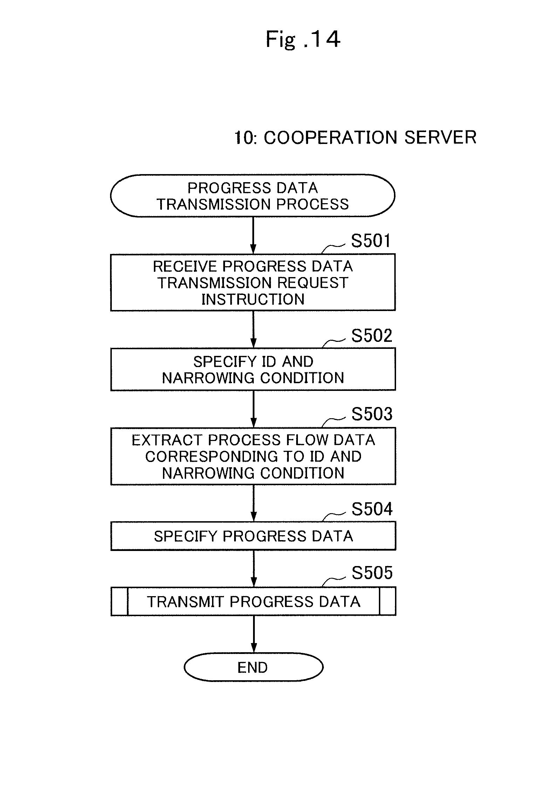

Next, an example of a progress data transmission process that is executed by the cooperation server 10 in the system 500 of this example will be described. FIG. 14 is a flowchart that illustrates an example of the progress data transmission process executed by the cooperation server 10 in the system 500 of this example.

In the progress data transmission process, first, the cooperation server 10 receives a progress data transmission request instruction from an administrator of the EC site or a customer in step S501. The progress data transmission request instruction is input from a terminal that is managed by the administrator of the EC site or a customer. In addition, the progress data transmission request instruction includes information designating the type of data requested to be transmitted. In other words, in the case of the progress data transmission request instruction from the administrator of the EC site, the progress data transmission request instruction includes an administrator ID that uniquely specifies an administrator of the EC site. On the other hand, in the case of the progress data transmission request instruction from a customer of the EC site, the progress data transmission request instruction includes a user ID that uniquely specifies a customer. In addition, the EC system 500 may be configured such that a mail address is used as the user ID.

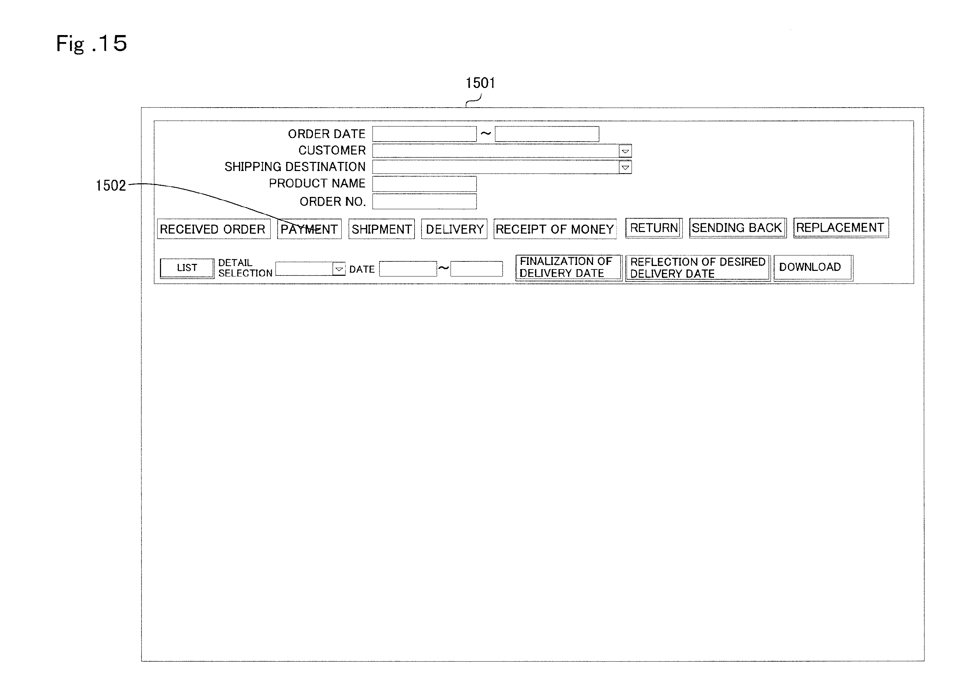

FIG. 15 is a schematic diagram that illustrates an example of an input screen 1501 used for executing the progress data transmission request instruction. As illustrated in FIG. 15, the input screen includes a narrowing region used for narrowing a request target. In other words, the progress data transmission request instruction of this example is data including an ID used for specifying a transmission source and a narrowing condition.

The narrowing region includes a progress narrowing region 1502 narrowing a business process of which the progress is requested to be provided. The progress narrowing region 1502 is configured such that selection/no-section can be checked based on a difference in the appearance. In FIG. 15, in the progress narrowing region, "received order", "payment", "shipment", "delivery", and "reception of money" are selected. When such a selection is made (in other words, when "received order", "payment", "shipment", "delivery", and "reception of money" are selected), an entry (row) of data displayed as progress data is narrowed according to the selection. In other words, in the progress data narrowed based on the input screen 1501 illustrated in FIG. 15, each entry having one or more of "received order", "payment", "shipment", "delivery", and "reception of money" is displayed (in other words, process flow data including one or more progress of "received order", "payment", "shipment", "delivery", and "reception of money" is extracted and displayed), and each entry having none of "received order", "payment", "shipment", "delivery", and "reception of money" is not displayed (in other words, process flow data including none of "received order", "payment", "shipment", "delivery", and "reception of money" is not extracted and is not displayed).

In this example, while the extraction condition of the progress data is configured to be narrowed by using the input screen 1501, a configuration may be employed in which a narrowing process is not executed, and all the data corresponding to an ID is extracted by using only the ID.

In addition, on the input screen 1501 of this example, while the progress narrowing region 1502 used for narrowing entries is arranged, selection items used for narrowing the display items (columns) of the progress data may be arranged on the input screen 1501.

Next, when the progress data transmission request instruction is received, the cooperation server 10 specifies an ID and a narrowing condition included in the progress data transmission request instruction in step S502.

When the ID and the narrowing condition are specified, the cooperation server 10 extracts process flow data corresponding to the ID and the narrowing condition by referring to the cooperation DB 15 in step S503.

When the process flow data is extracted, the cooperation server 10 specifies progress data representing the progress of a transaction for each ordered product by referring to the extracted process flow data in step S504. Particularly, the progress data specified here is progress of each business unit and represents progress of each business unit designated by the narrowing condition.

When the progress data is specified, the cooperation server 10 transmits the specified progress data to the terminal that has transmitted the progress data transmission request instruction in step S505.

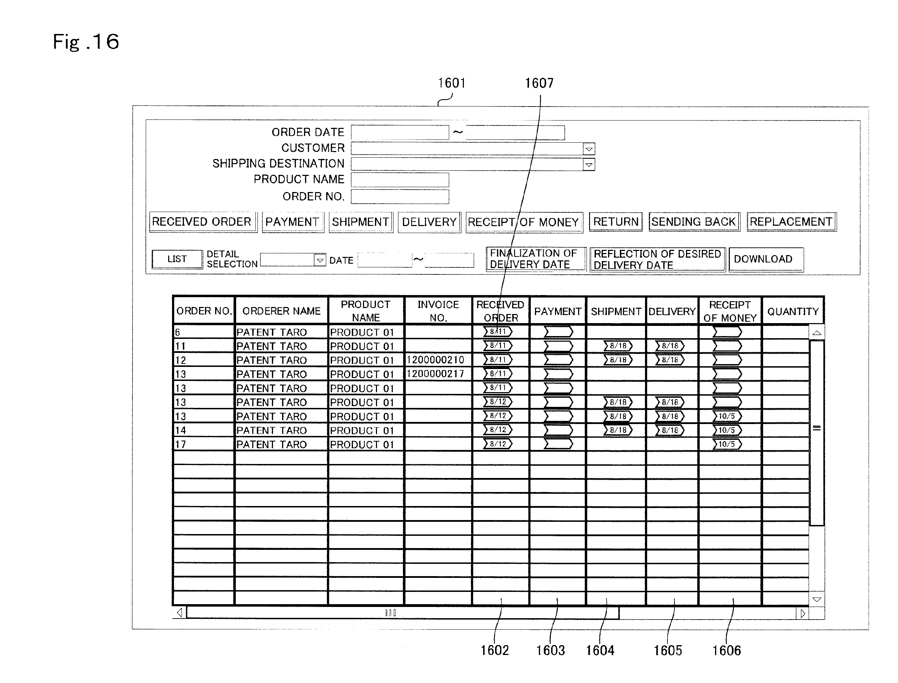

FIG. 16 is a schematic diagram that illustrates an example of a progress data display screen 1601 displayed on a terminal that has received the progress data. In other words, FIG. 16 is a schematic diagram that illustrates an example of the progress data display screen displayed based on the transmitted progress data. In addition, on the progress data display screen 1601 illustrated in FIG. 16, it is assumed that data displayed based on a progress data transmission request instruction requested from a customer of the EC site is displayed. As illustrated in FIG. 16, the progress data display screen 1601 includes regions for displaying an orderer name, a product name, and the like and a progress status display region displaying a progress status.

The progress status display region includes a received order status display field 1602, a payment status display field 1603, a shipment status display field 1604, a delivery status display field 1605, and a reception of money status display field 1606. In each status display field, a classified arrow mark 1607 is displayed. Accordingly, the user can check whether the status is in a completed state or non-completed state at a glance. In addition, inside each arrow mark, date on which the state is completed is written. In this way, a screen interface used for checking the progress is devised for easy checking, and accordingly, the progress checking screen having improved convenience can be provided.

Particularly, the EC system 500 is configured to receive received order data managed by other EC sites in the enterprise system. Accordingly, data displayed on the progress data display screen 1601 includes data relating to products purchased at the other EC sites. In other words, on the progress data display screen 1601, the progress of products purchased at several EC sites by the user are displayed. Accordingly, the user using the EC system can inquire about the progress of transactions having mutually-different characteristics occurring in the EC system altogether. In addition, for the same reason, the administrator of the EC site can manage progress of transactions having mutually-different characteristics occurring in the EC system altogether.

In addition, the EC system 500 is configured to receive business data (for example, payment data, delivery data, or the like) generated in a non-EC site in the enterprise system from the non-EC site server 520. Accordingly, the data displayed on the progress data display screen 1601 includes data relating to a transaction executed at the non-EC site. In other words, on the progress data display screen 1601, the progress of transactions that are not managed by the EC site are displayed. Accordingly, the user using the EC system can inquire about the progress of transactions having mutually-different characteristics occurring in the EC system altogether. In addition, for the same reason, the administrator of the EC site can inquire about the progress of transactions having mutually-different characteristics occurring in the EC system altogether.

Furthermore, more detailed data may be configured to be further displayed from the data displayed on the progress data display screen. For example, when an "order number" is selected, a detailed item display screen (not illustrated in the figure) may be configured to be displayed. In other words, on the detailed item display screen, data associated with an order number is displayed in a list. At least a part of the data displayed here may be rewritten.

Returning to the description of the flow of the progress data transmission process, the cooperation server 10 that has received the progress data ends the progress data transmission process.

As described above, in the above-described embodiment, the cooperation server (the cooperation server 10) operated by the ERP is configured to include a database (the cooperation DB 15) in which business data (process flow data) generated for each business unit in a series of business processes executed in a transaction from received order to delivery of a product including received order, payment, and shipment is registered, receive business data (process flow data) from an EC site selling products on the Internet by referring to the product data storage unit (the product data DB 16) storing data of the products and the enterprise system supplying products to the EC site, and transmit the progress data used for displaying the progress data display screen displaying the progress of each business process on a display device of a terminal by referring to the database (the cooperation DB 15) to the terminal transmitting a progress data transmission request according to a progress data transmission request instruction from the administrator or the customer of the EC site. According to such a configuration, the user using the EC site can inquire about and manage the progress of transactions generated in the EC system altogether.

In addition, as described in the above-described embodiment, the cooperation server (the cooperation server 10) is configured to communicate with the enterprise system including a business data storage unit (the process flow DB 101) storing various kinds of business data and update the database based on the transmitted business data by referring to the business data storage unit. According to such a configuration, by using the data managed by the enterprise system, the user using the EC system can inquire about and manage the progress of transactions generated in the EC system altogether.

In addition, as described in the above-described embodiment, the cooperation server (the cooperation server 10) transmits received order data in which a received order content and a user ID are associated with each other to the enterprise system according to the reception of a product purchase request from a customer using the EC site on the EC site. In addition, the enterprise system is configured to receive the received order data transmitted from the cooperation server, receive non-EC site data as business data from a non-EC site server that is a server managing data relating to transactions executed at a site other than the EC site and manages non-EC site data in which a user ID and at least one of the payment data and the shipment data are associated with other, and update the business data (process flow data) stored in the business data storage unit (the process flow DB 101) based on the received received order data or the received non-EC site data. According to such a configuration, by using the data managed by the enterprise system, the user using the EC system can inquire about and manage progress of transactions having mutually-different characteristics that are generated in the EC system altogether.

In addition, as described in the above-described embodiment, the cooperation server (the cooperation server 10) is configured to communicate with the non-EC site server (the non-EC site server 520), receive the non-EC site data from the non-EC site server as business data, and update the database (the cooperation DB 15) based on the received non-EC site data. According to such a configuration, the user using the EC system can inquire about and manage progress of transactions having mutually-different characteristics that are generated in the EC system altogether.

Furthermore, as described in the above-described embodiment, the enterprise system is configured to communicate with the other EC site management server (other EC site management server 510) managing the other EC site of which the administrator is different from that of the EC site, receive business data managed by the other EC site from the other EC site management server, and update the database (the process flow DB 101) stored in the business data storage unit (the process flow DB 101) based on the received business data managed by the other EC site. According to such a configuration, the user using the EC system can inquire about and manage progress of transactions having mutually-different characteristics that are generated in the EC system altogether.

In addition, as described in the above-described embodiment, the cooperation server (the cooperation server 10) is configured to transmit the progress data display screen displaying the progress of a transaction of each ordered product. According to such a configuration, the user using the EC system can inquire about and manage progress of transactions of each product that are generated in the EC system altogether.

In addition, as described in the above-described embodiment, the cooperation server (cooperation server 10) is configured to extract business data managed by a designated user ID by referring to the database (the cooperation DB 15) and specify progress data representing the progress of transactions of each ordered product by referring to the extracted business data.

Furthermore, as described in the above-described embodiment, the database (the process flow data DB and the cooperation DB 15) is configured to include the business data table (process flow data table) in which the business data (the process flow data) is registered. In addition, the business data is configured as data including the status data, the common data, and the process-specific data. Furthermore, the status data is configured to data that represents the progress of each business process. In addition, the common data is configured to be data that is common to business processes included in the same process flow that is configured by a plurality of business processes. In addition, the process-specific data is configured to be data that is specific to each business process included in the same process flow. Furthermore, the status data is configured to be updated according to the update of the process-specific data. According to such a configuration, since the number of tables included in the business data can be suppressed to be minimal, the amount of data required for building the EC site can be reduced.

In addition, although not particularly described in the above-described embodiment, the non-EC site data may be configured to include delivery data representing the delivery status, reception of money data representing the status of the reception of money, return data representing the return status, and sending-back data representing the sending-back status.

Furthermore, in the EC system 500 according to the above-described embodiment, the cooperation server 10 is configured to additionally have the function of a server managing the EC site. However, in the EC system 500, the function included in the cooperation server 10 for managing the EC site may be configured to be included in any other server (for example, the EC site management server). In such a case, in the EC system, it may be configured such that the cooperation server and the EC site management server communicate with each other through radio communication, and updated contents of the databases of the servers are reflected on the databases thereof. In addition, in a case where a progress data transmission request instruction from the user using the EC system is transmitted to the EC site management server, the EC site management server may be configured to transmit the received progress data transmission request instruction to the cooperation server, so that the progress data is received from the cooperation server.

The present invention is useful for inquiring about the progress of transactions or managing the progress of transactions in an EC system.

## Claims

1. A cooperation server being operated by an ERP, the cooperation server comprising:
a database in which business data generated for each business unit in a series of business processes executed in a transaction from received order to delivery of a product including received order, payment, and shipment is registered;
a business data reception unit configured to receive business data from an EC site selling products on the Internet by referring to a product data storage unit that stores data of products and an enterprise system supplying products to the EC site; and
a progress data transmission unit configured to transmit progress data used for displaying a progress data display screen displaying progress of each business process on a display device of a terminal by referring to the database to the terminal transmitting a progress data transmission request according to a progress data transmission request instruction from an administrator or a customer of the EC site.

2. The cooperation server according to claim 1, further comprising:
a communication unit configured to communicate with the enterprise system that includes a business data storage unit storing various kinds of business data; and
an update unit configured to update the database based on the business data, which is transmitted by the enterprise system by referring to the business data storage unit, received by the business data reception unit.

3. The cooperation server according to claim 2, further comprising a received order data transmission unit configured to transmit received order data in which a received order content and a user ID are associated with each other to the enterprise system according to reception of a product purchase request from a customer using the EC site on the EC site,
wherein the enterprise system includes
a received order data reception unit configured to receive received order data transmitted from the cooperation server,
a non-EC site data reception unit configured to receive non-EC site data as business data from a non-EC site server that is a server managing data relating to transactions executed at a site other than the EC site and manages non-EC site data in which a user ID and at least one of payment data and shipment data are associated with other, and
a business data update unit configured to update the business data stored in the business data storage unit based on the received received order data or the received non-EC site data.

4. The cooperation server according to claim 3, wherein
the communication unit additionally communicates with the non-EC site server,
the business data reception unit additionally receives non-EC site data from the non-EC site server as business data, and
the update unit updates the database based on the received non-EC site data.

5. The cooperation server according to claim 3 or 4, wherein
the enterprise system communicates with another EC-site management server managing another EC site of which an administer is different from that of the EC site and receives business data managed at the another EC site from the another EC site management server, and
the business data update unit additionally updates the business data stored in the business data storage unit based on the received business data managed by the another EC site.

6. The enterprise data management server according to any of claims 1 to 5, the progress data transmission unit transmitting the progress data display screen displaying progress of transactions of each ordered product.

7. The cooperation server according to claim 6, wherein the progress data transmission unit includes
an extraction unit configured to extract the business data managed by a designated user ID by referring to the database, and
a progress specifying unit configured to specify the progress data representing progress of a transaction of each ordered product by referring to the extracted business data.

8. The cooperation server according to claim 7, wherein the progress data represents progress of each business unit.

9. The cooperation server according to any of claims 1 to 8, wherein
the database includes a business data table in which the business data is registered,
the business data is data that includes status data, common data, and process-specific data,
the status data is data that represents progress of each business process,
the common data is data that is common to business processes included in the same process flow configured by a plurality of business processes,
the process-specific data is data that is specific to each business process included in the same process flow,
and
the status data is updated according to an update of the process-specific data.

10. A non-transitory computer-readable storage medium storing a cooperation program used for controlling a cooperation server operated by an ERP, the cooperation program causing the cooperation server including a database in which business data generated for each business unit in a series of business processes executed in a transaction from received order to delivery of a product including received order, payment, and shipment is registered to execute:
receiving business data from an EC site selling products on the Internet by referring to a product data storage unit that stores data of products and an enterprise system supplying products to the EC site; and
transmitting progress data used for displaying a progress data display screen displaying progress of each business process on a display device of a terminal by referring to the database to the terminal transmitting a progress data transmission request according to a progress data transmission request instruction from an administrator or a customer of the EC site.

11. An EC system comprising:
a cooperation server configured to be operated by an ERP;
an EC site configured to sell products on the Internet by referring to a product data storage unit storing data of products; and
an enterprise system configured to supply products to the EC site,
the cooperation server including
a database in which business data generated for each business unit in a series of business processes executed in a transaction from received order to delivery of a product including received order, payment, and shipment is registered,
a business data reception unit configured to receive business data from the EC site and the enterprise system, and
a progress data transmission unit configured to transmit progress data used for displaying a progress data display screen displaying progress of each business process on a display device of a terminal by referring to the database to the terminal transmitting a progress data transmission request according to a progress data transmission request instruction from an administrator or a customer of the EC site.
